Europäisches Patentamt

European Patent Office

Office européen des brevets

Publication number: **0 273 213**
**A1**

# EUROPEAN PATENT APPLICATION

Application number: **87117674.9**

Int. Cl.⁴ **B65G 17/06**

Date of filing: **30.11.87**

Priority: **04.12.86 IT 2257486**

Date of publication of application:
**06.07.88 Bulletin 88/27**

Designated Contracting States:
**DE FR GB**

Applicant: **TECNO POOL S.p.A.**
**Via L. Da Vinci**
**I-35010 Marsango Padova(IT)**

Inventor: **Pessa, Luciano**
**Via Vicenza No.25/B**
**I-35042 Este Padova(IT)**

Representative: **Petruzzelli, Antonio**
**Via E. De Amicis No. 25**
**I-20123 Milan(IT)**

Grill structure for a bar-chain conveyor.

An endless chain conveyor comprising lateral chains (12) and a set of cross bars (11) fastened to the chains (12) and evenly spaced among themselves, and a grill structure (12), connected to the cross bars to form the conveying surface. The grill structure (16) consists of a set of separate flat grill members (17) made of wave-shaped metal wire, each weave of a grill members (17) having lateral arms (18) and a loop portion (19) said loop portion (19) defining C-shape hooking means to loosely join the cross bars (11) of the chain conveyor.

Fig. 3

## Grill structure for a bar-chain conveyor

This invention refers to a grill structure for an endless conveyor, and specifically to a bar-chain conveyor provided with a grill structure which forms a conveying surface which can shift slightly relative to the conveyor bars allowing the conveyor to curve freely in any direction in space, without impeding its sliding motion. This invention also refers to a particular embodiment of the grill structure as well as to endless conveyors that employ the abovementioned belt and grill structure.

Patents FR-A-2.162.150 and US-A-4.244.464 describe metallic conveyor belts, specifically meant for the conveyance of eggs or the like. Said belts consist of two lateral chains of the round-link type where each link in one chain is connected to a link in the opposite chain by a cross bar. The cross bars are spaced out at a constant pitch, along the length of the belt, which reflects the distance between the links on the chain.

Belts of the type mentioned are paticularly suitable to transport eggs, or rather to transport articles the size of which will prevent them from falling through the gaps between the cross bars. Such belts are therefore unsuitable for conveying of small articles that require a wide and stable resting surface. Increasing the thickness or width of the cross bars or positioning the bars closer together by using chains with smaller links isn't always possible or advisable since these measures entail enormously heavy conveyor belt structures which may have to be dragged over considerable distances. This solution is also impractical due to the high cost of such a belt. It would be, instead, desirable to have belt structures of the type mentioned above that, in addition to providing a wide and stable surface and being suitable for the conveyance of small articles, would also be inexpensive and light in weight, so as to allow transport speeds suitable for operational requirements.

There are, therefore, commercially-available metallic conveyor belts that consist of a wire mesh which is either wound around or woven onto supporting cross bars or formed separately and then slid over said bars. In the first case, special machines are required to wind the wire mesh over the cross bars of the belt, while in the latter case, additional worktime is required to assemble the wire mesh with the bars. In both cases belt production time and costs are particularly high, thus the use of these conveyor belts isn't always economically justifiable for many of the applications for which they were designed. Furthermore the wire mesh cannot be mounted after the conveyor has been installed, nor can it be removed once assembled.

The object of this invention is to provide a grill structure for conveyor belts in general or for conveyor belts of the type described above, that is to say with cross bars fastened to lateral driving chains, which can be used and marketed as is for several applications and which, when necessary, can be combined by the manufacturer or user with a grill structure suitable for providing a wide and stable transport surface to support articles to be conveyed.

A further object of this invention is to provide a grill structure for a conveyor belt of the type mentioned above which is extremely simple, easy to assemble and requires a minimal amount of maintenance and in which the grill that forms the conveying surface of the belt can be easily mounted or removed without having to disassemble the belt or the whole conveyor.

This object can be achieved by a grill structure combined with a bar-chain conveyor according to this invention and as defined in claim 1.

The invetion is described below in greater detail, with reference to a specific example, which considers a conveyor belt with cross bars connected to lateral round-link chains. It is, however, obvious, that the innovative principles and the grill structure according to this invention can be put to use advantageously on any known bar-chain conveyor belt. In the drawings:

Figure 1 is the top view of part of a conveyor belt built in accordance with the principles of this invention.

Figure 2 is an enlarged cross section of a portion of the conveyor belt shown in figure 1, along the line 2-2 of figure 1.

Figure 3 is a further enlarged top view of the conveyor belt shown in figure 1.

Figure 4 is a longitudinal cross section of the conveyor belt, along the line 4-4 in figure 3.

Figure 5 is a top view of the wave-shaped wire, before its sides are bent, from which the grill members according to this invention are manufactured.

Figure 6 is a top view of a grill member manufactured from the wave-shaped wire shown in the previous figure.

Figure 7 is a bottom view of the grill member shown in figure 6.

Figure 8 is a cross sectional view along line 8-8 in figure 6.

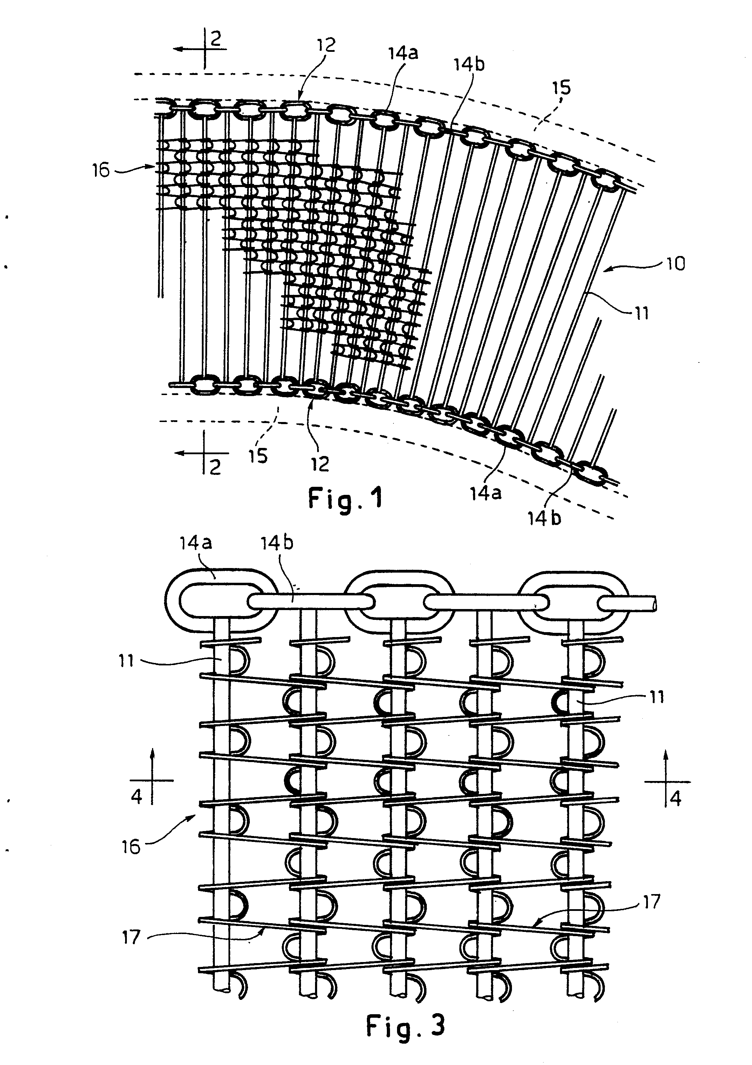

Figures 1 through 4 show part of a conveyor belt 10 of the type comprising cross bars 11, in which each bar 11 is fastened or welded to the links 14a, 14b of two driving chains 12 which, in the example, are round-link chains, with rings 14a and 14b laid out alternatively at 90 angles to each other and in which the chain links run along guide rails 15 in a previously known manner. It is important to note, however, that for the purposes of this invention, the way in which the lateral chains of the conveyor belt are made and the way in which the cross bars 11 are interconnected, which depends on the application for which the conveyor belt is designed, are not relevant.

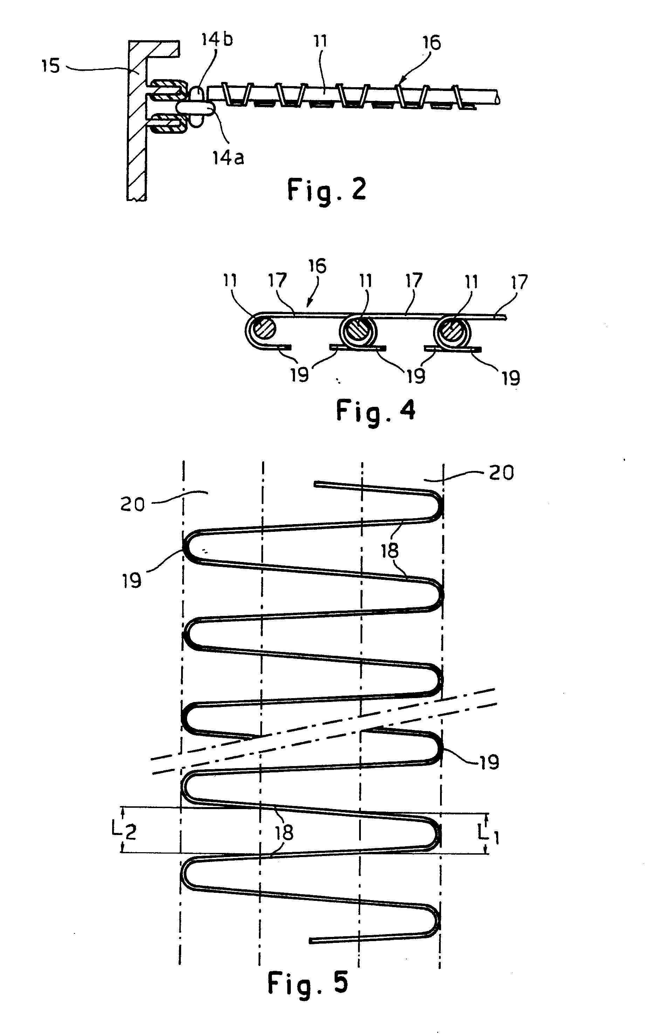

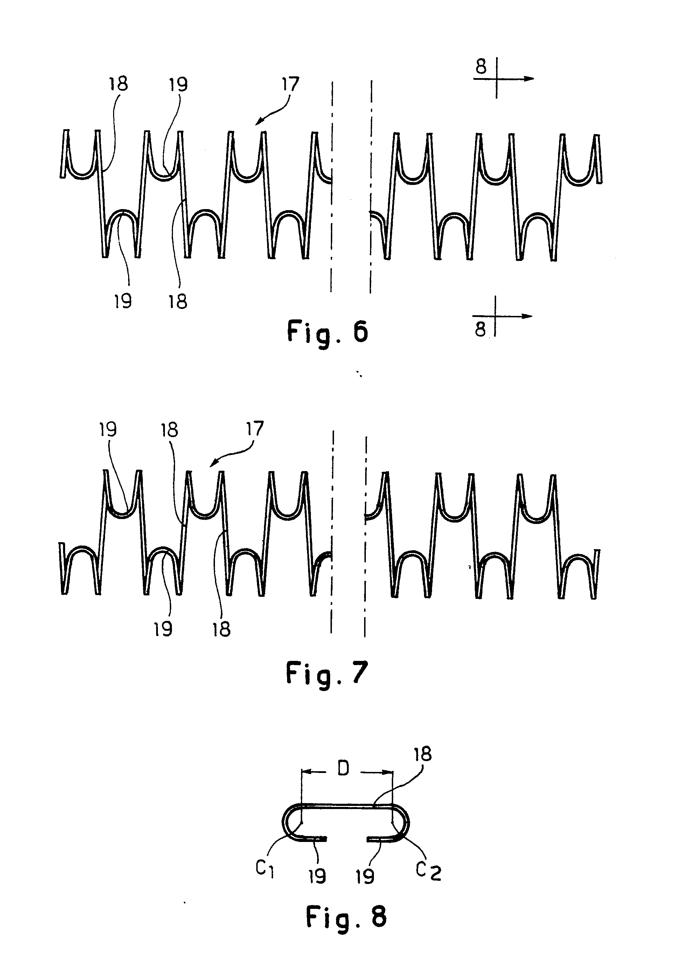

The conveyor belt 11, shown in figure 1 and 2 also comprises a grill structure 16 which hooks onto and overlap the bars 11 forming the entire conveying surface of the belt. The structure of the grill 16 is shown in greater detail in the enlarged views of figures 3 and 4 and consists of separate flat grill members 17 each member 17 being hooked onto two contiguous bars 11 of the belt. The grill members 17 are shown in detail in figures 6, 7 and 8 and are made out of a wave bent or shaped wire cut to the required size and bent on the sides starting from continuous wave or zigzag-shaped wire shown in figure 5.

As is shown in figure 5, according to a preferred embodiment, the grill members 17 are made from a flat zigzag-shaped wire which is made by alternatively bending wire using appropriate dyes in order to make a sequence of bends or waves each of which has two sides or linear arms 18 which diverge from each other towards the side opposite to the bend or bottom loop portion 19 of each wave. The arms of the waves must be angled, in the example shown, so that the width L1 measured from the outside at one side of each grill member 17 is equal to, or slightly less than the width L2 measured from the inside at the opposite side, said width L1 and L2 depending not only on the angle of the straight sides or arms 18 but also on their length and the thickness of the wire being used.

The wave-shaped wire 17 in figure 5 is thus cut to a pre-set size that corresponds to the width of the grill 16 of the belt to be constructed, after which the loops 19 along the two side hands 20 of the wave-shaped wire 17 are bent on one side to form hooking means, that is downward and inward, thus taking on a C-shape shown in figures 6, 7 and 8. When bending the loop portions, it is necessary to insure that the bending radius of the tool around which said loop portions are laterally bent is slightly larger than that of the cross bars 11 of the belt, thus resulting in a loose fit which allows relative shifting and sliding movement that is necessary amongst the cross bars 11 and the grill 16 when the conveyor belt goes around a curve in its path. It is also necessary to make sure that the opposite ends of the look or C-shaped portions defined by said Bottom loops 19 extend slightly over the maximum slide allowed for the bars 11 and be spaced apart at a distance slightly greater than the diameter of the cross bars 11 to allow for the assembling and/or removal of single grill members even on a fully assembled conveyor belt; furthermore, the distance D between the bending centers C1 and C2 of the hooking or C-shaped loop portions 19 along the two lateral bands 20, must be aligned or lie on two parallel lines the distance between which must be greater than the pitch between the cross bars 11 in the extended condition of chains 12 or the maximum distance that may exist between two contiguous bars at any point in their path.

The assembling of the grill members described above is carried out as follows: after having prepared the grill members 17 necessary to form the grill surface for the whole belt to be completed, given a bar-chain belt of the specified size, of the type shown in figure 1 for instance, start from one end of the belt by hooking up the C-shaped loops 19 on one side of a grill member 17 to a first cross bar 11 on the belt; the next cross bar 11 is then pulled next to the first one thanks to the sliding movement between the lateral chain links until it is hooked by the C-shaped loop portions 19 on the opposite side of the same grill member. Another grill member is then attached by hooking the C-shaped loops on one side of the waves onto a second cross bar, laying said C-shaped loops of the second grill member between the wider ends of the waves of the first grill member, and so on, fastening one grill member after the other until the grill surface for the whole conveyor belt is completed.

The extreme operational versatility of the grill structure described in this invention is shown by the preceding remarks. The bar-chain conveyor belt can, in fact, be marketed in its traditional form, that is without the metallic grill 16, and, if needed, the grill can be provided by hooking up the grill members 17 in the manner described above, either on a fully assembled conveyor belt or on one that is yet to be installed, on certain portions of the belt or on the whole conveyor. Furthermore, if part of the grill wears out, the single worn grill members can easily be substituted with new ones, while the other grill links remain hooked to the belt's bars.

Both the bar-chain conveyor belt and single grill members, while respecting the principles embodied in this invention, can be built in a different manner from the described one, while maintaining the advantages and characteristics mentioned above; specifically that the cross bar belt 10, instead of being of the round-link chain type, could be of another type with the cross bars connected to articulated connection flat links or the bars themselves could be shaped to be interconnected among themselves. Additionally, the single grill members 17 and the same loop portions 19 can be shaped differently, without departing from the invention as claimed.

## Claims

1. A grill (16) used to form conveying surfaces for a bar-chain conveyor belt, said conveyor belt comprising lateral drive chains (12) interconnected by cross bars (11), characterized by the fact of comprising a set of separate flat grill members (17), each grill member (17) consisting of a wave-shaped metal wire, and hooking means (19) on both sides of the grill members (17) said hooking means comprising invariably C-shaped loop portions of at least part of the waves portions of said metal wire, said C-shaped loop portions (19), at one end of a wave portions, having a width (L1) smaller than the internal width (L2) at the opposite end of the same wave.

2. A grill as claimed in claim 1, characterized by the fact that the sides of each wave portion of said grill members (17) are diverging from said C-shaped loop portion (19).

3. A grill as claimed in the preceding claim 2 characterized by the fact that each wave of said grill members (17) is defined by diverging straight arms (18).

4. A grill as claimed in the previous claims characterized by the fact that the bending centers (C1, C2) of said C-shaped loop portions (19) on both sides of a grill member (17) lie on parallel lines.

5. A conveyor of the type comprising lateral chain members (12) and cross bars (11) evenly spaced apart along the belt and a grill defining the conveying surface (16) of the belt according to claim 1, characterized by the fact that said grill consists of separate grill members (17), each grill member (17) being hooked onto two contiguous cross bars (11), the C-shaped loop portions (19) on one side of a grill member (17) penetrating into corresponding wave portions on the opposite side of a contiguous grill member (17).

6. A conveyor as claimed in claim 5, characterized by the fact that the bending centers (C1, C2) of the C-shaped loop portions (19) on both side of a grill member (17) lie on parallel lines, the distance (D) between said bending centres (C1, C2) being greater than the maximum pitch between contiguous cross bars (11) on the conveyor.

7. A conveyor as claimed in claim 5, characterized by the fact that the C-shaped loop portions (19) of said wave portions of the grill are loosely hooked onto said cross bars (11).

8. A conveyor as claimed in claim 5, characterized by the fact that the C-shaped loop portions (19) protrude inward for a length greater than the maximum movement that can occur between the grill members (17) and the cross bars (11).

9. A conveyor as claimed in any of the preceeding claims 5 through 8 characterized by the fact that the conveyor is of the type comprising lateral ring-link chains (14a, 14b), in which the cross bars (11) are firmly fastened to links on opposite lateral chains.

0 273 213

Fig. 1

Fig. 3

Fig. 2

Fig. 4

Fig. 5

Fig. 6

Fig. 7

Fig. 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 038 461 (DRAADINDUSTRIE JONGE POERINK) <br> * page 5, line 12 - page 6, line 18; figures 1-5 * | 1,5 | B 65 G 17/06 |
| A | | 2-4 | |
| D,Y | US-A-4 244 464 (VAN CAPELLEVEEN) <br> * claim 1; figures 1, 2 * | 1,5 | |
| D,A | | 9 | |
| A | DE-U-7 231 050 (LEHMANN) <br> * page 3, line 24 - page 4, line 2; figures 5, 6 * | 1-5 | |
| A | DE-C- 419 892 (TIEKE) <br> * page 1, line 1 - page 2, line 15; figures 1, 2 * | 1,5,7,8 | |
| A | DE-C- 259 622 (THE PHILADELPHIA TEXTILE MACHINERY CO.) <br> * page 1, lines 30-65; figures 1-7 * | 1,5-8 | TECHNICAL FIELDS SEARCHED (Int. Cl.4) |
| A | US-A-3 368 662 (POERINK) <br> * column 3, lines 1-37; figures 1-6 * | 1,8 | B 65 G 15/00 <br> B 65 G 17/00 |

The present search report has been drawn up for all claims

| Place of search | Date of completion of the search | Examiner |
|---|---|---|
| BERLIN | 29-02-1988 | SIMON J J P |

EPO FORM 1503 03.82 (P0401)